# EUROPEAN PATENT APPLICATION

(11) **EP 4 582 468 A1**
(43) Date of publication of application: **09.07.2025**
(21) Application number: 23859910.4
(22) Date of filing: 25.07.2023
(51) Int. Cl.: C08J 3/20, B09B 3/00, C01B 17/02, C08L 21/00, C10L 3/10

(54) **SULFUR RECYCLE SYSTEM**

(30) Priority: 02.09.2022 JP 2022140390
(71) Applicant: BRIDGESTONE CORPORATION, Chuo-ku Tokyo 104-8340 (JP)
(72) Inventor: TANIGUCHI Masayuki, Tokyo 104-8340 (JP)
(74) Representative: Marks & Clerk LLP
(86) International application number: PCT/JP2023/027269
(87) International publication number: WO 2024/048141

(57) **Abstract**

A sulfur recycling system using biomass, which is designed to be industrially applicable, is provided. A sulfur recycling system using biomass includes a desulfurization step of desulfurizing biomass or a biomass-processed material to remove a sulfur-containing substance from the biomass or biomass-processed material; a recovery step of recovering sulfur from a desulfurization residue generated in the desulfurization step; a processing step of processing the recovered sulfur into vulcanizing sulfur; a kneading step of kneading the vulcanizing sulfur with a double bond-containing polymer; and a vulcanization step of vulcanizing the double bond-containing polymer.

## Description

### TECHNICAL FIELD

The present disclosure relates to a sulfur recycling system.

### BACKGROUND

Biomass fuels can be new energy sources that are an alternative to fossil fuels. Biomass fuel typically refers to a fuel that is derived from biomass such as plants or animals or produced via biomass such as plants or animals and is a fuel expected to have the effect of reducing CO₂. Among biomass fuels, gaseous fuel, *i.e.,* biogas, is a gas obtained through fermentation (methane fermentation) or anaerobic digestion. Biogas is a renewable resource that does not deplete, and the fuel components (e.g., methane) in the gas can be directly utilized or combusted to generate electricity, etc. Therefore, biogas is expected to serve as a versatile energy source.

Furthermore, microalgae, such as Euglena, can produce lipids in their cells via photosynthesis. Biomass fuel can be produced by extracting and refining these lipids, which is expected to reduce CO₂.

Typically, the above-mentioned biomass fuel contains sulfur compounds, particularly hydrogen sulfide, due to the raw materials or production processes, etc. Since hydrogen sulfide causes adverse effects, such as corrosion of surrounding equipment, hydrogen sulfide is generally removed before biomass fuel is utilized as the energy source (for example, see PTL 1). On the other hand, techniques to suppress the generation of hydrogen sulfide *per se* have also been studied. For example, PTL 2 discloses a yeast technology with reduced hydrogen sulfide production capability.

### CITATION LIST

### Patent Literature

PTL 1: JP 2012-101139 A
PTL 2: JP 2010-246440 A

### SUMMARY

### (Technical Problem)

Here, sulfur is known to undergo vulcanization reactions with double bond-containing polymers. Such a vulcanization technology has been widely used, particularly in the field of rubber, supporting the development of industries. Sulfur used for industrial purposes is primarily manufactured from hydrogen sulfide that is by-produced when crude oil is hydrodesulfurized. In other words, sulfur is derived from fossil resources. From the perspective of maintaining the global environment and realizing a sustainable society, it is crucial to establish a recycling system for such sulfur.

**In** this regard, however, hydrogen sulfide contained in biogas, for example, is currently removed, as mentioned above. There have been no particular reports on recycling sulfur from such hydrogen sulfide so far, due to difficulties such as high costs, low recovery volume, and unstable yield of recycled raw materials, etc.

Accordingly, the present disclosure is directed to providing a sulfur recycling system using biomass, which is designed to be industrially applicable.

### (Solution to Problem)

The main features of the present disclosure for solving the above problem are as follows.
[1] A sulfur recycling system using biomass, comprising:
   a desulfurization step of desulfurizing biomass or a biomass-processed material to remove a sulfur-containing substance from the biomass or biomass-processed material;
   a recovery step of recovering sulfur from a desulfurization residue generated in the desulfurization step;
   a processing step of processing the recovered sulfur into vulcanizing sulfur;
   a kneading step of kneading the vulcanizing sulfur with a double bond-containing polymer; and
   a vulcanization step of vulcanizing the double bond-containing polymer.
[2] The sulfur recycling system according to [1], wherein the sulfur-containing substance is selected from hydrogen sulfide and sulfur dioxide.
[3] The sulfur recycling system according to [1] or [2], wherein the biomass is selected from animal excreta, sewage, food waste, and microalgae.
[4] The sulfur recycling system according to any one of [1] to [3], wherein the desulfurization in the desulfurization step is performed by bringing the biomass or biomass-processed material into contact with a contact medium selected from an adsorbent, solvent, and bacterium.

### (Advantageous Effect)

According to the present disclosure, a sulfur recycling system using biomass, which is designed to be industrially applicable, can be provided.

### DETAILED DESCRIPTION

The following describes the present disclosure in detail based on the embodiments.

Note that the compounds described in this specification may be partially or entirely derived from fossil resources, biological resources such as plant resources, or recycled resources such as used tires. Alternatively, they may be derived from a mixture of two or more of fossil resources, biological resources, and recycled resources.

### <Sulfur Recycling System>

The sulfur recycling system of the present disclosure (hereinafter, sometimes simply referred to as "recycling system") is a sulfur recycling system using biomass. The recycling system of the present disclosure includes the steps of desulfurizing biomass or a biomass-processed material to remove a sulfur-containing substance from the biomass or biomass-processed material (desulfurization step), recovering sulfur from a desulfurization residue generated in the desulfurization step (recovery step), processing the recovered sulfur into vulcanizing sulfur (processing step), kneading the vulcanizing sulfur with a double bond-containing polymer (kneading step), and vulcanizing the double bond-containing polymer (vulcanization step).

The recycling system of the present disclosure is applicable to the field of rubber, such as tires, which requires vulcanization using sulfur.

It should be noted that although the present disclosure pertains to sulfur recycling, nitrogen-containing substances such as ammonia are often generated from the biomass used in the present disclosure. Therefore, in the recycling system of the present disclosure, nitrogen recycling can also be performed simultaneously.

### (Raw Materials to be Recycled)

In this specification, "biomass" typically refers to organic resources derived from plants and animals, excluding fossil resources (such as petroleum, coal, and natural gas). The biomass is not particularly limited and a wide variety of materials, including, for example, animal excreta, sewage, food waste, microalgae, black liquor, paper, residues from sawmills, construction-derived wood, non-edible parts of crops, and forest residues, can be used as the biomass.

As the raw material to be recycled, which is supplied to the recycling system of the present disclosure, biomass *per se* may be used, or a material obtained through any form of processing on the biomass (hereinafter defined in this specification as "biomass-processed material") may be used, or a combination of these may be used. Here, the processing mentioned above preferably refers to processing that converts biomass into a form more easily utilized.

For example, as the biomass-processed material, biogas obtained by subjecting biomass such as animal excreta, sewage, or food waste to methane fermentation can be mentioned. The methane fermentation can be carried out using known methods. The biogas obtained from the methane fermentation typically contains sulfur-containing substances, primarily hydrogen sulfide, along with methane, which is the fuel component.

Additionally, as an example of the biomass-processed material, oils produced by microalgae, including Euglena, can be mentioned, for example. The oils produced by microalgae typically contain sulfur-containing substances, primarily hydrogen sulfide, along with oils such as wax esters.

In the recycling system of the present disclosure, the biomass or biomass-processed material used as the raw material to be recycled (processing target) may be a single type or a combination of two or more types.

### (Desulfurization Step and Recovery Step)

In the recycling system of the present disclosure, the desulfurization step is a step of desulfurizing biomass or a biomass-processed material to remove a sulfur-containing substance from the biomass or biomass-processed material. In the desulfurization step, a desulfurization residue is usually generated.

Furthermore, the recovery step is a step of recovering sulfur from the desulfurization residue generated in the desulfurization step. In other words, in the recovery step, sulfur is recovered as elemental sulfur.

It should be noted that the recycling system of the present disclosure is premised on the use of biomass or a biomass-processed material containing a sulfur-containing substance as the raw material to be recycled. The sulfur-containing substance present in the biomass or biomass-processed material or the sulfur-containing substance removed in the desulfurization step is not particularly limited as long as it contains sulfur as a constituent element, and examples thereof include hydrogen sulfide and sulfur dioxide, for example. The sulfur-containing substance removed in the desulfurization step may be a single substance or a combination of two or more substances.

The means for desulfurization in the desulfurization step is not particularly limited as long as the sulfur-containing substance can be removed from the raw material to be recycled (biomass or biomass-processed material). As one example, desulfurization can be performed by bringing the raw material to be recycled (biomass or biomass-processed material) into contact with a contact medium selected from an adsorbent, solvent, and bacterium. These contact media may be used alone or in combination of two or more.

Below, embodiments of the desulfurization step and recovery step are described in detail for each contact medium used.

### [Adsorbent]

The adsorbent used as the contact medium may be any adsorbent that can selectively treat (adsorb) sulfur-containing substances. Specific examples thereof include iron oxide, zinc ferrite, and zeolite. The adsorbents may be used alone or in combination of two or more.

As one example, when iron oxide is used as the adsorbent, hydrogen sulfide can be converted to iron sulfide upon contact during the desulfurization step. In this case, the desulfurization residue corresponds to the adsorbent containing iron sulfide. Subsequently, in the recovery step, the iron sulfide in the desulfurization residue can be reacted with a strong acid to revert the iron sulfide to hydrogen sulfide, and sulfur can be recovered from the hydrogen sulfide using known methods. Additionally, in some cases, sulfur in the desulfurization residue (the adsorbent containing iron sulfide) may also contain elemental sulfur along with iron sulfide. Sulfur can also be recovered from such an adsorbent containing elemental sulfur using known methods.

Alternatively, as one example, when zeolite is used as the adsorbent, hydrogen sulfide can be physically adsorbed directly onto the zeolite during the desulfurization step. In this case, the desulfurization residue corresponds to the adsorbent containing hydrogen sulfide. Subsequently, in the recovery step, the desulfurization residue may be subjected to reduced pressure and high-temperature conditions to recover hydrogen sulfide, and sulfur can then be recovered from the hydrogen sulfide using known methods.

Adsorbents such as iron oxide are advantageous because the sulfur recovery efficiency is relatively high.

As a method for recovering sulfur from hydrogen sulfide, the Claus process can be mentioned, for example. The Claus process involves the partial combustion of hydrogen sulfide (H₂S) to convert one-third of hydrogen sulfide into sulfur dioxide (SO₂) and using the reaction heat to refine elemental sulfur. In this method, to enhance the reaction efficiency, the unreacted hydrogen sulfide, and sulfur dioxide are subjected to the Claus reaction using an alumina catalyst, allowing for the recovery of elemental sulfur in a higher amount.

### [Solvent]

The solvent used as the contact medium may be any solvent that can selectively treat (absorb or extract) sulfur-containing substances. Specific examples thereof include monoethanolamine, diethanolamine, and methyldiethanolamine. The solvents may be used alone or in combination of two or more. Additionally, the solvents may be diluted with water and used as an aqueous solution.

As an example, when monoethanolamine is used as the solvent, monoethanolamine can absorb hydrogen sulfide upon contact during the desulfurization step. In this case, the desulfurization residue corresponds to the solvent that has absorbed hydrogen sulfide. Subsequently, in the recovery step, hydrogen sulfide is separated by heating the desulfurization residue, and sulfur can be recovered from the hydrogen sulfide using a known method (*e.g.,* the Claus process described above). The same applies when diethanolamine or methyldiethanolamine is used as the solvent.

It should be noted that solvents such as monoethanolamine are advantageous because they can be reused as they are as contact media even after they are heated during the recovery step.

### [Bacterium]

The bacterium used as the contact medium may be any bacterium that can selectively treat sulfur-containing substances. Specific examples thereof include sulfur-oxidizing bacteria, etc. More specifically, sulfur-oxidizing bacteria disclosed in, for example, Takuro Kobayashi et al., "Hydrogen Sulfide Removal from Biogas by Sulfur Oxidizing Bacteria under Microaerophilic Environment in the Anaerobic Digester" (Japanese Journal of JSCE G, Vol. 65, No. 2, pp. 104-113, June 2009) can be mentioned. The bacteria may be used alone or in a combination of two or more.

As one example, when a sulfur-oxidizing bacterium is used as the bacterium, hydrogen sulfide is oxidized to produce sulfur upon contact during the desulfurization step. In this case, the desulfurization residue corresponds to the bacterium containing sulfur. Subsequently, in the recovery step, a cell lysis solution containing a surfactant or other agents can be applied to lyse the desulfurization residue, after which sulfur can be extracted using a solvent, allowing for the recovery of sulfur. Examples of solvents used for the extraction include carbon disulfide and toluene.

It should be noted that bacteria are advantageous due to their relatively low maintenance costs.

### (Processing Step)

The processing step is a step of processing the recovered sulfur into vulcanizing sulfur. The processing step can employ known methods. For example, in the processing step, the recovered sulfur (elemental sulfur) can be dissolved in carbon disulfide, followed by heating, rapid cooling, separation, drying, and optional oil treatment, if necessary, to obtain insoluble sulfur (vulcanizing sulfur).

### (Kneading Step)

The kneading step is a step of kneading the vulcanizing sulfur described above with a double bond-containing polymer.

Examples of double bond-containing polymers include polymers widely used in the field of rubber, such as tires. Specific examples of double bond-containing polymers include, for example, natural rubber (NR), butadiene rubber (BR), styrene-butadiene rubber (SBR), isoprene rubber (IR), chloroprene rubber (CR), acrylonitrile-butadiene rubber (NBR), halogenated butyl rubber, and ethylene-propylene-diene rubber (EPDM). The double bond-containing polymers may be used alone or in combination of two or more.

Additionally, in the kneading step, besides the above-mentioned vulcanizing sulfur and double bond-containing polymer, various additives such as vulcanization co-agents such as stearic acid, vulcanization accelerators, vulcanization acceleration aids such as zinc oxide, age-resistors, oils, softeners, plasticizers, and processing aids may be appropriately added and kneaded according to the purpose.

The kneading method is not particularly limited, and kneading machines such as rolls, internal mixers, and Banbury rotors can be used for kneading.

### (Vulcanization Step)

The vulcanization step is a step of vulcanizing the double bond-containing polymer kneaded with vulcanizing sulfur. In this step, the above-mentioned vulcanizing sulfur functions as the vulcanizing agent.

The vulcanization temperature is not particularly limited and is typically set to 130°C or higher and 180°C or lower. Furthermore, the vulcanization time is not particularly limited and is typically set to 5 minutes or longer and 120 minutes or shorter.

The recycling system of the present disclosure has been described above. Next, several systems related to the present disclosure will be described below.

### <System for Predicting the Yield of Hydrogen Sulfide>

It is assumed that desulfurization is performed using a contact medium selected from an adsorbent, solvent, and bacterium when the recycling system of the present disclosure is industrially applied. Since the generation amount of sulfur-containing substances derived from biomass is influenced by various factors, the prediction thereof is relatively difficult. Until now, since sulfur-containing substances (such as hydrogen sulfide) generated from biomass have been either not recycled or simply removed, there has been no need to accurately predict the amount generated.

Accordingly, in this specification, a system for predicting the yield of hydrogen sulfide generated from biomass (hereinafter, sometimes referred to as the "yield prediction system") is provided.

The yield prediction system of the present embodiment includes the following steps:
monitoring, continuously or periodically, data on one or more yield indices that affect the yield of hydrogen sulfide;
calculating the predicted yield of hydrogen sulfide based on the monitored data on yield indices;
determining the timing for collecting a contact medium based on the calculated predicted yield of hydrogen sulfide; and
collecting the contact medium at the determined timing.

Examples of yield indices include the raw material, temperature, and humidity, for example.

In particular, when biogas obtained through methane fermentation is used as the raw material to be recycled (biomass or biomass-processed material), further examples of yield indices include the amount of animal excreta, the type of animal producing the excreta (pigs, cows, chickens, sheep, etc.), the temperature of the fermenter, the size of the fermenter, and the oxygen concentration in the fermenter.

Furthermore, when oils produced by microalgae are used as the raw material to be recycled (biomass or biomass-processed material), further examples of yield indices include the size of the fermenter, the amount of sunlight, and the oxygen concentration.

It should be noted that the above-described yield prediction system can enhance the calculation accuracy of the predicted yield of hydrogen sulfide by using accumulated data on yield indices.

Additionally, when two or more types of contact media are used, the yield prediction system may further include a step of determining the collection route for the contact media.

### <System for Predicting the Activity of Adsorbents>

It is assumed that desulfurization is performed using an adsorbent as the contact medium when the recycling system of the present disclosure is industrially applied. Since the adsorption capacity of the adsorbent may degrade over time, it is necessary to replace the adsorbents at appropriate timing. Otherwise, sulfur-containing substances (such as hydrogen sulfide) that are not captured (adsorbed) may cause corrosion of peripheral equipment such as gas tanks. It is assumed in the present disclosure that the amount of recoverable sulfur-containing substances and the efficient use of the adsorbent may also be affected.

Therefore, in this specification, a system for predicting the activity of the adsorbent (hereinafter, sometimes referred to as the "activity prediction system") is provided.

The activity prediction system of the present embodiment includes the following steps:
monitoring, continuously or periodically, data on one or more yield indices that affect the yield of hydrogen sulfide;
determining the predicted activity (which can also be referred to as the degree of degradation) of the adsorbent based on the monitored data on yield indices;
determining the timing for collecting an adsorbent used as the contact medium based on the determined predicted activity; and
collecting the adsorbent at the determined timing.

Examples of yield indices include the raw material, temperature, and humidity, for example.

In particular, when biogas obtained through methane fermentation is used as the raw material to be recycled (biomass or biomass-processed material), further examples of yield indices include the amount of animal excreta, the type of animal producing the excreta (pigs, cows, chickens, sheep, etc.), the temperature of the fermenter, the size of the fermenter, and the oxygen concentration in the fermenter.

Furthermore, when oils produced by microalgae are used as the raw material to be recycled (biomass or biomass-processed material), further examples of yield indices include the size of the fermenter, the amount of sunlight, and the oxygen concentration.

It should be noted that the above-described activity prediction system can enhance the accuracy of the determination of the predicted activity of the adsorbent by using accumulated data on yield indices.

Additionally, when two or more types of contact media (adsorbents) are used, the activity prediction system may further include a step of determining the collection route for the contact media.

### <System for Collecting and Transporting Adsorbent>

It is assumed that desulfurization is performed using an adsorbent as the contact medium when the recycling system of the present disclosure is industrially applied. The absolute amount of produced sulfur-containing substances (sulfur) obtained from biomass or biomass-processed materials, particularly biogas, is, in some cases, smaller than the amount of sulfur-containing substances (sulfur) obtained from fossil resources. For this reason, it is necessary to collect sulfur-containing substances obtained from multiple locations or aggregate them into a single location.

Therefore, in this specification, a system for collecting and transporting an adsorbent, particularly a spent adsorbent (hereinafter, sometimes referred to as the "collection and transport system") is provided.

The collection and transport system of the present embodiment includes the following steps:
monitoring, continuously or periodically, data on the degree of consumption of an adsorbent actually used as the contact medium,
determining the timing for collecting the adsorbent based on the monitored data on the degree of consumption and data on the location where the adsorbent is present, and
collecting and transporting the adsorbent as a spent adsorbent at the determined timing.

Examples of the degree of consumption include the usage (actual operating) time of the adsorbent and the activity of the adsorbent.

Additionally, when two or more types of contact media (adsorbents) are used, the collection and transport system may further include a step of determining the collection route for the contact media.

### <System for Proving Biomass-derived Sulfur-based Compound>

When the recycling system of the present disclosure is industrially applied, there may be a requirement to prove whether or not a sulfur-containing substance removed in the desulfurization step, sulfur-containing substance, or the recovered sulfur (hereinafter, sometimes collectively referred to as "sulfur-based compounds") are derived from biomass.

Therefore, in this specification, a system for proving that sulfur-based compounds are derived from biomass (hereinafter, sometimes referred to as the "proof system") is provided.

The proof system of the present embodiment includes means configured to manage the traceability related to sulfur in the sulfur recycling system of the present disclosure and to prove that the substances (raw materials) used are derived from biomass.

The management of the traceability related to sulfur can be applied, for example, to sulfur-containing substances removed during the desulfurization step, desulfurization residues after the desulfurization step, or the recovered sulfur. In addition, the management of the traceability related to sulfur can also be performed based on, for example, the isotopic composition ratio of sulfur, etc.

The proof system is preferably configured to allow access to the history of the managed traceability.

### INDUSTRIAL APPLICABILITY

According to the present disclosure, a sulfur recycling system using biomass, which is designed to be industrially applicable, can be provided.

## Claims

1. A sulfur recycling system using biomass, comprising:
a desulfurization step of desulfurizing biomass or a biomass-processed material to remove a sulfur-containing substance from the biomass or biomass-processed material;
a recovery step of recovering sulfur from a desulfurization residue generated in the desulfurization step;
a processing step of processing the recovered sulfur into vulcanizing sulfur;
a kneading step of kneading the vulcanizing sulfur with a double bond-containing polymer; and
a vulcanization step of vulcanizing the double bond-containing polymer.

2. The sulfur recycling system according to claim 1, wherein the sulfur-containing substance is selected from hydrogen sulfide and sulfur dioxide.

3. The sulfur recycling system according to claim 1 or 2, wherein the biomass is selected from animal excreta, sewage, food waste, and microalgae.

4. The sulfur recycling system according to any one of claims 1 to 3, wherein the desulfurization in the desulfurization step is performed by bringing the biomass or biomass-processed material into contact with a contact medium selected from an adsorbent, solvent, and bacterium.
